# EUROPEAN PATENT APPLICATION

(11) **EP 1 583 328 A1**
(43) Date of publication of application: **05.10.2005**
(21) Application number: 04028796.3
(22) Date of filing: 04.12.2004
(51) Int. Cl.: H04M 1/02

(54) **Slide type mobile phone module**

(30) Priority: 26.03.2004 KR 2004020873
(71) Applicant: Lee, Geun Ju, Kyungki-do (KR)
(72) Inventor: Lee, Geun Ju, Kyungki-do (KR)
(74) Representative: Weitzel, Wolfgang

(57) **Abstract**

Disclosed is a slide type mobile phone module for sliding a cover over a main body with keypads. The slide type mobile phone of the present invention features smooth sliding motion, a minimum number of components in the module, improved workability, and reduced cost of manufacture.

## Description

### BACKGROUND OF THE INVENTION

### Field of the Invention:

The present invention relates in general to a slide module for sliding away a cover from a main body mounted with a keypad. More specifically, the present invention relates to a slide type mobile phone module for opening/closing the cover for the main body by sliding a slide module with the aid of the elastic restoring force of a coil spring whose both ends are fixed.

### Description of the Related Art

In general, mobile phones are classified, depending on how the covers of the mobile phones are opened or closed, into bar type, flip type, and folder type phones.

One of shortcomings of the bar type mobile phone is that the keypad thereof is exposed to outside and thus, the keypad is susceptible to damages. The flip type mobile phone was introduced next as a better option for mobile phone users. However, the main body of the flip type mobile phone was too long for users to conveniently carry the phones around.

Then the folder type mobile phone was developed to overcome the shortcomings of the bar type and flip type mobile phones. Unfortunately though, the hinge joint connecting the folder and the main body was too easily damaged by frequent opening and closing motions of the folder.

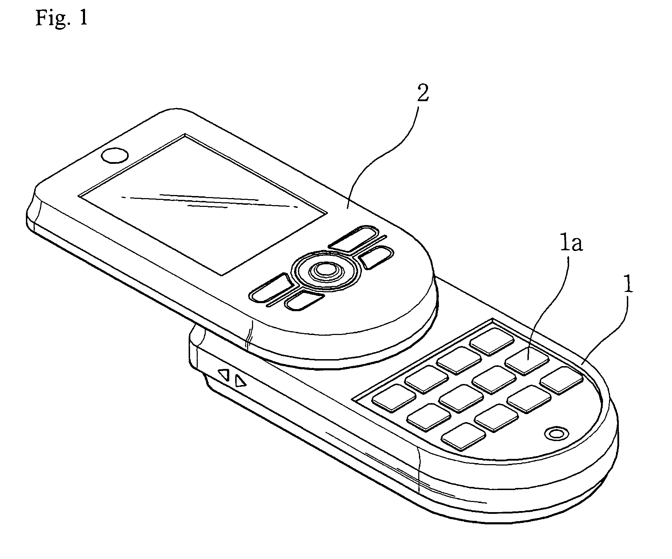

To resolve the shortcoming of the folder type mobile phone, a slide type mobile phone was introduced. As shown in Fig. 1, the slide type mobile phone includes a main body 1; and a cover 2 with a display. On the top surface of the main body 1 is a keypad 1a having key input buttons, and the cover 2 is slidably connected in a vertical direction to the main body 1 by a slide module (not shown).

In a traditional slide module, a slide guide member for sliding away the cover from the main body was usually on a rail structure. Because of the structural characteristics, the slide module was susceptible to external damages or shocks.

Also, when users open or close the slide type mobile phone, it was not certain whether the cover was completely opened or closed. This often caused inconvenience.

There was a way, though, for users to recognize opened state and closed state the cover. For example, when the cover slid away from the cover, a ball 415 was selectively locked in a hole h4, h5 on a base 420, making a click sound. By listening to the click sound, therefore, users were able to recognize the completion of the sliding motion of the cover.

Nevertheless, the noise that cover made during its sliding motion outweighed the users' capability of recognizing the completion of the sliding motion of the cover against the main body of the phone. Also, the assembly procedure of the slide type mobile phone was not easy, and a smooth sliding motion was not granted easily, either.

Moreover, even after the completion of the sliding motion, the cover kept sliding a little bit further by an external force because the ball had not been locked in the hole h4, h5 strongly enough. This often brought inconvenience for users.

### SUMMARY OF THE INVENTION

It is, therefore, an object of the present invention to provide a slide type mobile phone module featuring an improved reliability and smooth sliding motion of a cover, in which an elastic restoring force of a coil spring is utilized to slide away the cover with a display from a main body of the mobile phone mounted with a plurality of keypads.

Another object of the present invention is to provide a slide type mobile phone module featuring a minimum number of components, improved workability, and reduced cost of manufacture.

Still another object of the present invention is to provide a slide type mobile phone module capable of accurately recognizing the completion of a sliding motion of the cover against the main body of the mobile phone, thereby increasing user's convenience.

Yet another object of the present invention is to provide a slide type mobile phone module capable of preventing the cover from further sliding by an unexpected force from outside, after the cover has been completely slid away from the main body of the mobile phone.

To achieve the above objects and advantages, there is provided a slide type mobile phone module installed between a main body and a cover of the mobile phone for opening/closing the cover for the main body through the sliding motion, the module including: a lower plate combined with the main body of the mobile phone; an upper plate combined with the cover of the mobile phone for sliding over the lower plate; and a first coil spring with a designated length, whose one end being fastened to the lower plate by means of a first fastening pin, and the other end being fastened to the upper plate by means of a second fastening pin, wherein the upper plate slides are slidably moved over the lower plate by elastic force of the coil spring.

Preferably, the module further includes a second coil spring with a designated length, whose one end being fastened to the lower plate by means of a third fastening pin disposed at a lower portion of the first fastening pin, and the other end being fastened to the upper plate by means of a fourth fastening pin disposed at a lower portion of the second fastening pin.

In the exemplary embodiment, the lower plate includes a guide rail on the side, and the upper plate includes a joint opposite the guide rail.

Preferably, when the coil spring is curved to the utmost, the elastic force from the coil spring is used to complete the sliding motion of the upper plate.

Preferably, a surface of the guide rail is processed with a surface treatment or a curving treatment to reduce friction or noises during the sliding motion.

Preferably, a magnet is attached to an edge of the upper plate or the lower plate, whereby, after the completion of the sliding motion, the upper plate and the lower plate are magnetically combined.

### BRIEF DESCRIPTION OF THE DRAWINGS

The above aspects and features of the present invention will be more apparent by describing certain embodiments of the present invention with reference to the accompanying drawings, in which:

Fig. 1 is a schematic perspective view of a related art slide type mobile phone;

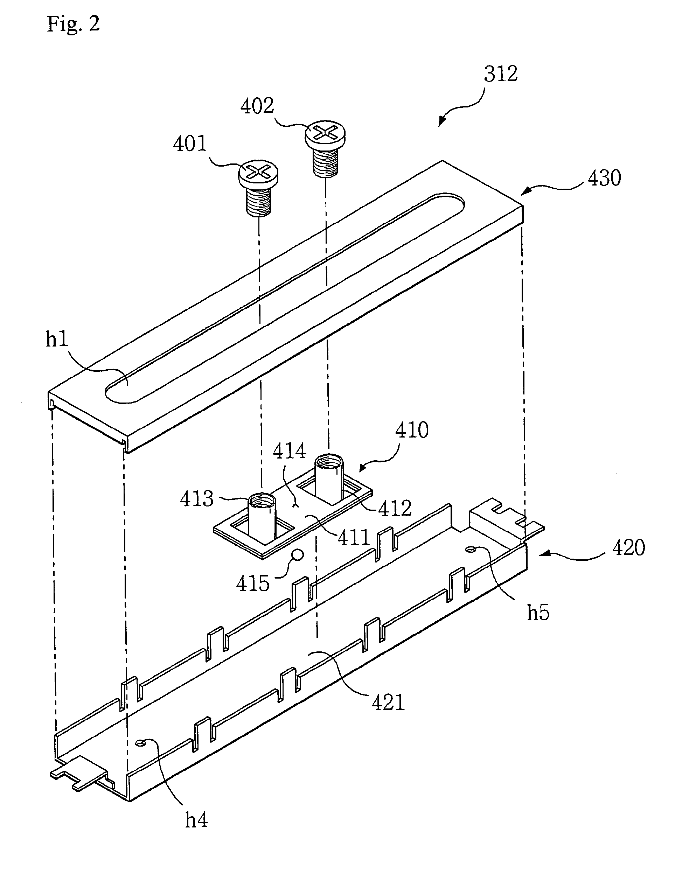

Fig. 2 is a schematic view of a module installed on a related art slide type mobile phone;

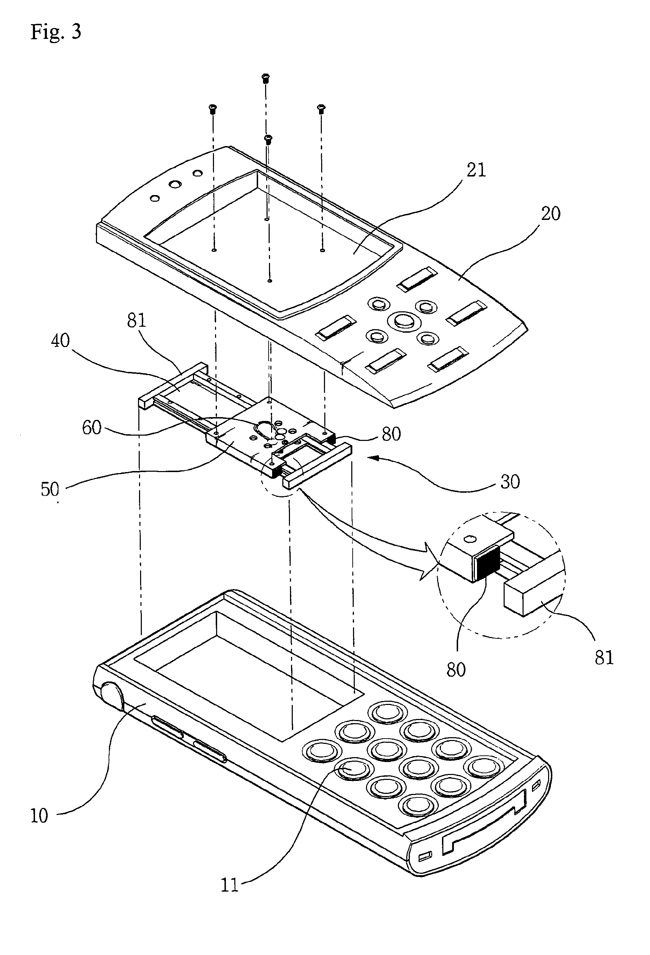

Fig. 3 is an exploded perspective view of a slide type mobile phone module according to one embodiment of the present invention;

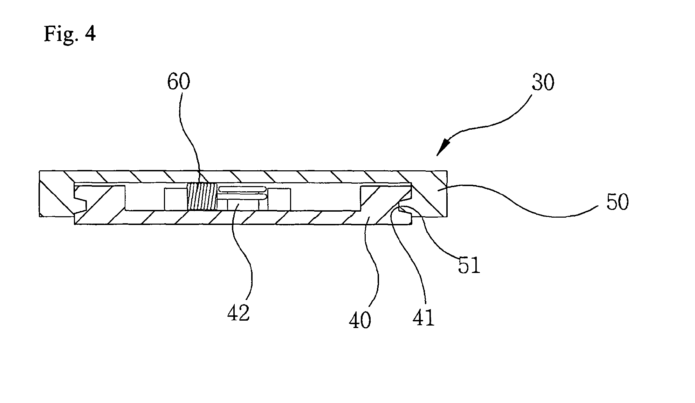

Fig. 4 is a cross-sectional view of a slide type mobile phone module according to one embodiment of the present invention;

Figs. 5a to 5c respectively illustrate operational states of a slide type mobile phone module according to one embodiment of the present invention;

Fig. 6 is an exploded perspective view of a slide type mobile phone module according to another embodiment of the present invention;

Fig. 7 is a cross-sectional view of a slide type mobile phone module according to another embodiment of the present invention; and

Figs. 8a to 8c respectively illustrate operational states of a slide type mobile phone module according to another embodiment of the present invention.

### DETAILED DESCRIPTION OF THE PREFERRED EMBODIMENTS

A preferred embodiment of the present invention will be described herein below with reference to the accompanying drawings. The matters defined in the description are nothing but the ones provided to assist in a comprehensive understanding of the invention. Thus, it is apparent that the present invention can be carried out without those defined matters.

A slide type mobile phone module 30 according to one embodiment of the present invention includes a lower plate 40 installed on a main body 10 by a screw (not shown) inserted into a through hole 46, and having a guide rail 41 on both sides; an upper plate 50 installed on a cover 20 by a screw (not shown) inserted into a through hole 55, and having a joint 51 in correspondence to the guide rail 41 to be able to slide the lower plate 40; and a first coil spring 60 having a designated length, one end being fastened eccentrically to the horizontal center of the lower plate 40 by means of a first fastening pin 42, and the other end being fastened on the upper plate 50 by means of a second fastening pin 52 disposed at the horizontal center of the upper plate 50.

When the elastic force from the first coil spring 60 is applied, the upper plate 50 slides over the lower plate 40, and the cover 20 is opened or closed for the main body 10.

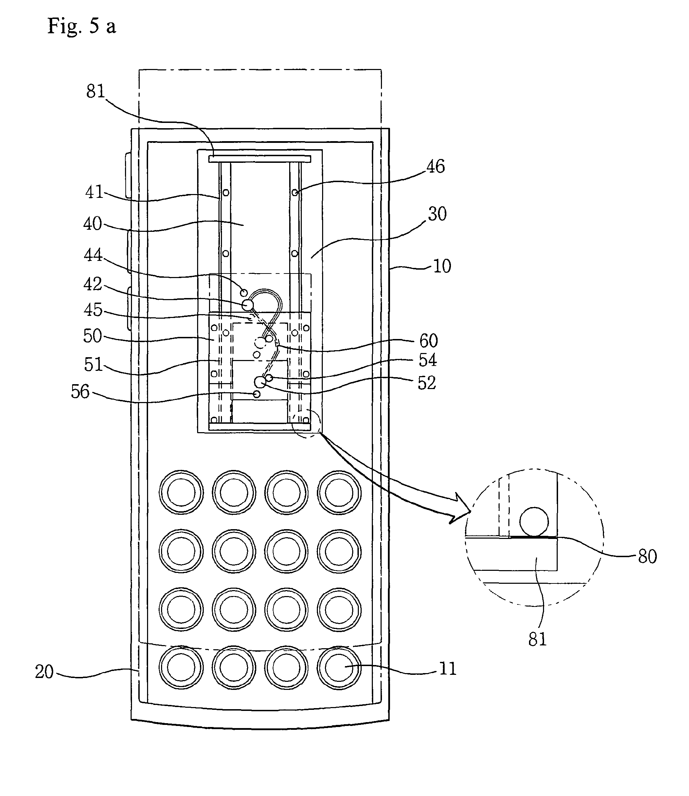

The following will now explain the operation of the slide type mobile phone module of the present invention, referring to Figs. 5a to 5c.

Fig. 5a illustrates a state that the cover 20 having the upper plate 50 is partially covering the main body 10 having the lower plate 40.

As shown in Fig. 5a, when a mobile phone user pushes the cover 20 upward, the second fastening pin 52 slightly moves upward relative to the first fastening pin 42.

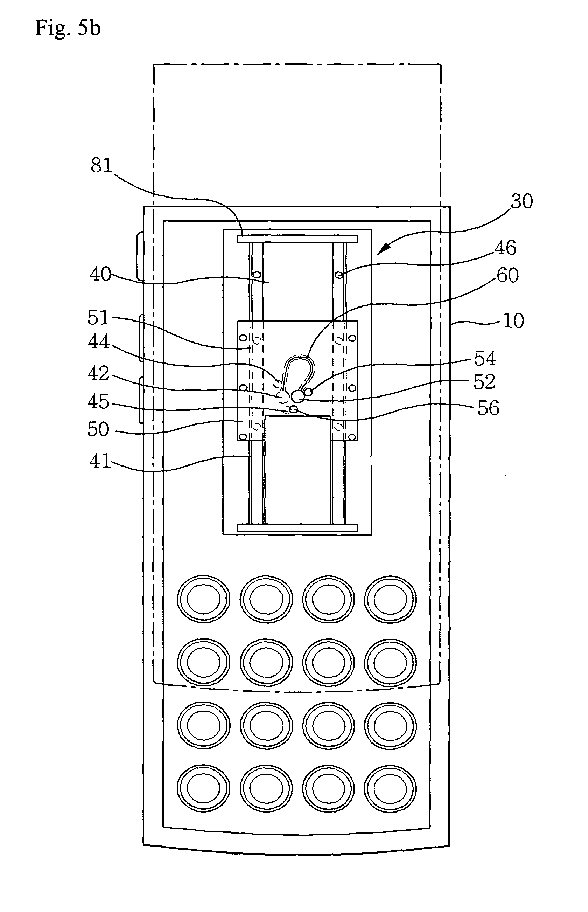

Fig. 5b illustrates a state that the cover 20 is pushed further upward. In this state, the compression force and the elastic restoring force of the first coil spring 60 are in balance with each other. Therefore, unless an external force is applied to the upper plate 50, the upper plate 50 momentarily stops on the lower plate 40.

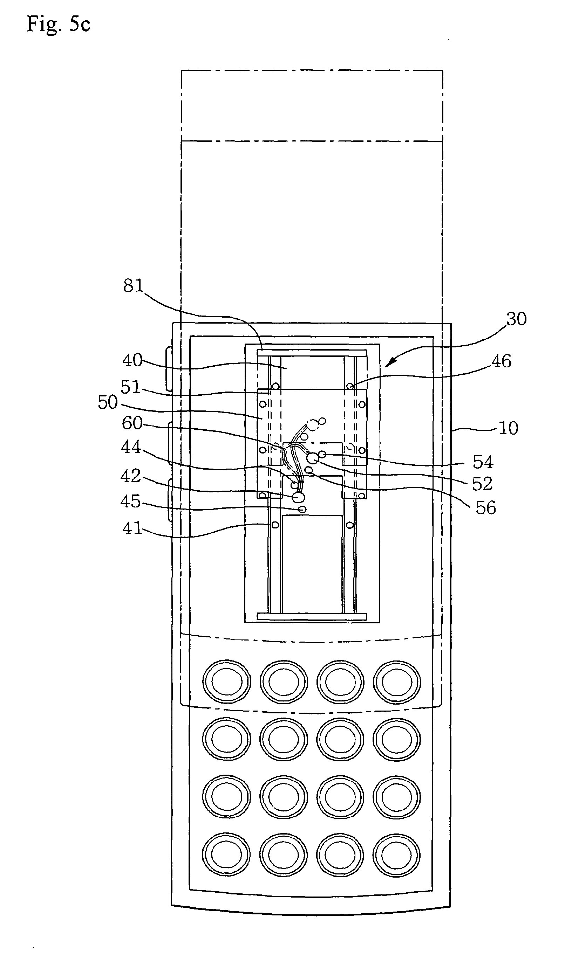

Next, Fig. 5c illustrates a state that the cover 20 is pushed upward even further. In this state, the elastic restoring force from the first coil spring 60 slides the upper plate 50 over the lower plate 40 in the upward direction.

More specifically, Fig. 5c illustrates an opened state of the cover 20 for the main body 10 as the upper plate 50 completely slides over the lower plate 40 by the elastic restoring force of the first coil spring 60.

By operating a plurality of keypads 11 installed on the top surface of the main body 10, the user is able to make a call or check messages.

As described above, since the cover 20 gets completely slid away from the main body 10 by the elastic restoring force of the first coil spring 60, the user no longer needs to check whether the sliding of the cover 20 has been completed.

In addition, the structural mechanism required to slide the upper plate 50 over the lower plate 40 and thus, to open/close the cover 20 for the main body 10, and components such as a stopper limiting the sliding motion are not needed any more. Thus, it becomes possible to minimize the number of components in the slide module 30, which consequently reduces cost of manufacture.

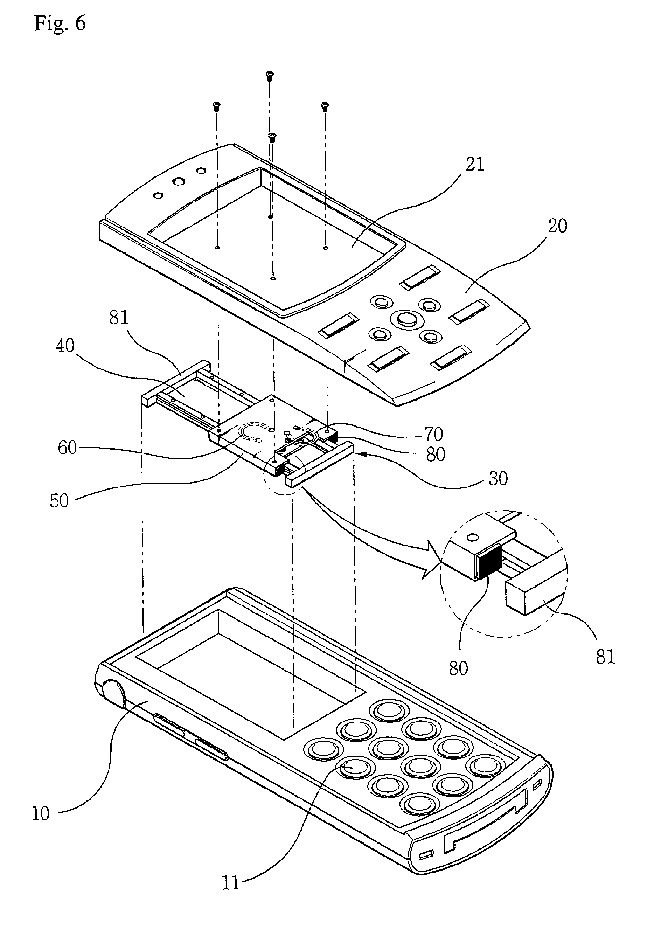

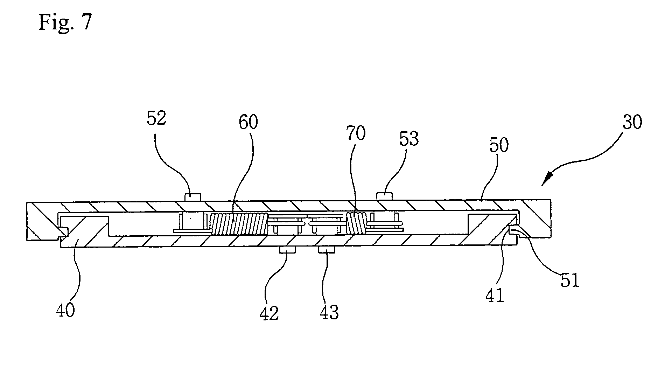

Now referring to Figs. 6 to 8, a slide type mobile phone module according to another embodiment of the present invention further includes a second coil spring 70, one end being fastened to the lower plate 40 by means of a third fastening pin 43 disposed at a lower portion than the first fastening pin 42 on the lower plate 40, and the other end being fastened to the upper plate 50 by means of a fourth fastening pin 53 disposed at a lower portion than the second fastening pin 52 on the upper plate 50.

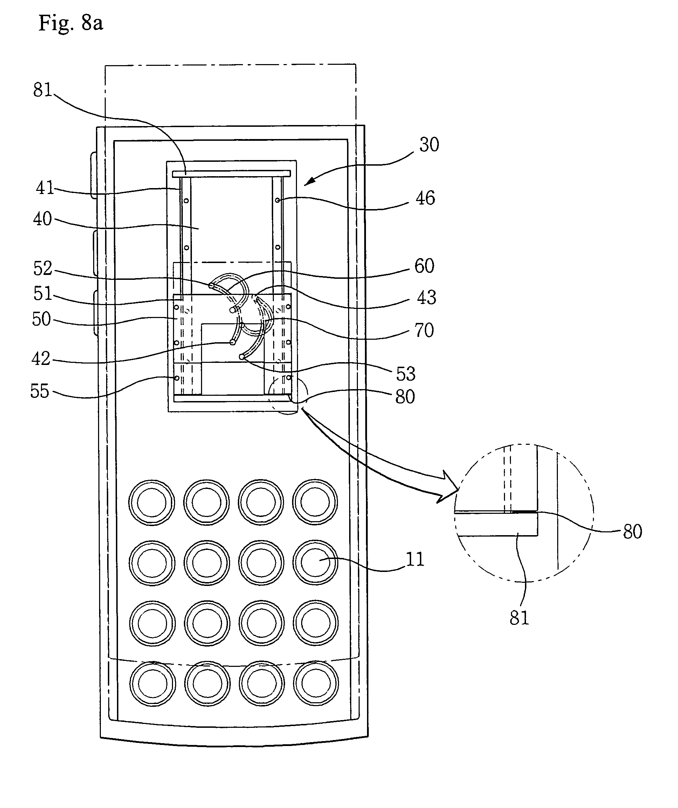

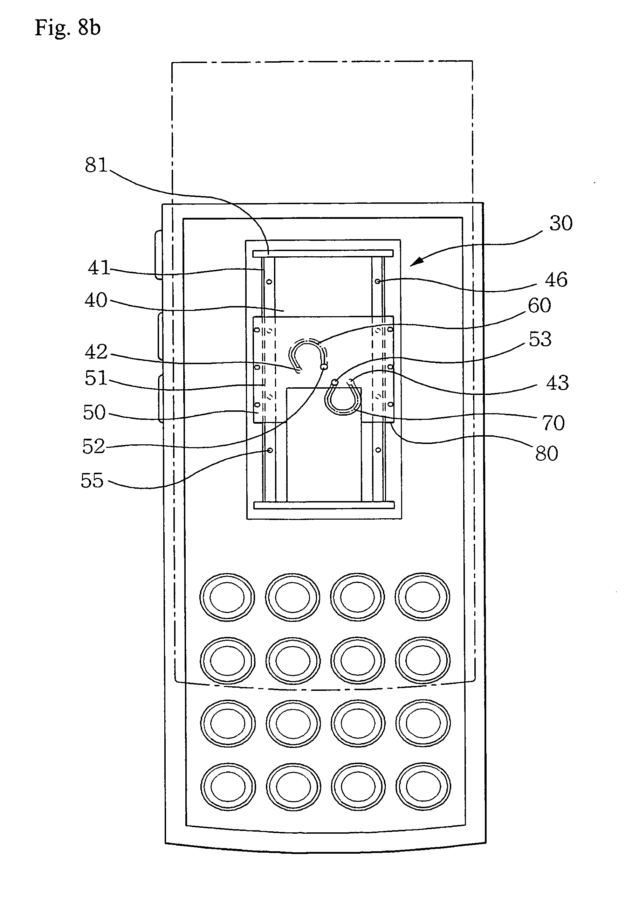

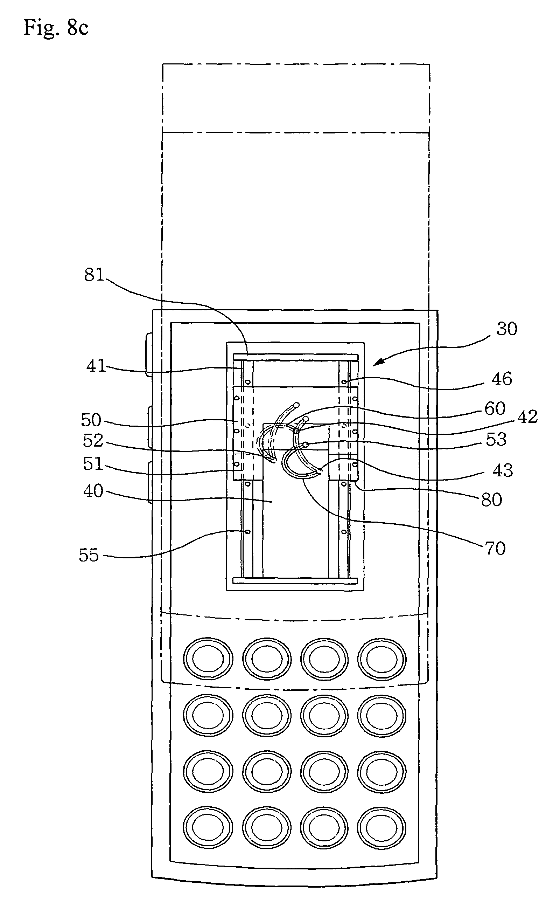

With reference to Fig. 8, the following will now explain the operation of the slide type mobile phone module according to another embodiment of the present invention.

Fig. 8a illustrates a state that the cover 20 having the upper plate 50 is partially covering the main body 10 having the lower plate 40.

As shown in Fig. 8a, when the mobile phone user pushes the cover 20 upward, the fourth fastening pin 53 slightly moves upward relative to the third fastening pin 43. At this time, the second coil spring 70 is compressed and curved in "U" shape in the upper left direction.

At the same time the second fastening pin 52 on the upper plate 50 moves upward. As a result, the first coil spring 60 is also compressed and curved in "U" shape in the lower left direction.

Fig. 8b illustrates a state that the cover 20 is pushed further upward. In this state, the third and fourth fastening pins 43, 53 are positioned parallel to each other.

Also, the second fastening pin 52 on the upper plate 50 moves upward, being parallel to the first fastening pin 42.

In result, the compression force and the elastic restoring force of the first and second coil springs 60, 70 are in balance with each other (that is, the first and second coil springs 60, 70 on opposite sides respectively form a "U" shape). Therefore, unless an external force is applied to the upper plate, the upper plate 50 momentarily stops on the lower plate 40.

Next, Fig. 8c illustrates a state that the cover 20 is pushed upward even further. In this state, the elastic restoring force from the first and second coil springs 60, 70 slides the upper plate 50 over the lower plate 40 in the upward direction. Also, Fig. 8c illustrates an opened state of the cover 20 for the main body 10 as the upper plate 50 completely slides over the lower plate 40 by the elastic restoring force of the first and second coil springs 60, 70.

By operating a plurality of keypads 11 installed on the top surface of the main body 10, therefore, the user is able to make a call or check messages.

Moreover, a surface treatment and curving process can be performed on the guide rail 41 of the lower plate 40, to reduce surface friction and noises during the sliding motion. Once the surface of the guide rail 41 is treated, the sliding motion becomes easier with less (or small) force, and the friction sound or noise is reduced.

After the sliding motion is completed, a magnet 80 attached to the lower edge of the upper plate and a suspension 81 of the lower plate are magnetically combined. Against an unexpected force from outside, this magnetic force provides the resisting force for further sliding of the cover.

In conclusion, the slide type mobile phone module of the present invention has the following advantages.

Since the elastic restoring force of the coil spring(s) is used to slide the cover with the display from the main body with a plurality of keypads, the sliding motion of the cover over the main body becomes much easier and smooth.

The number of components in the slide module for use in opening and closing the cover of the main body is minimized. In result, assembling work and time can be reduced, and workability is, therefore, improved. Moreover, the reduced cost of manufacture increases the price competitiveness of the mobile phone.

The user is able to accurately recognize the completion of the sliding motion of the cover over the main body, so user's convenience is increased.

Lastly, the friction and noises during the sliding motion are much reduced. Also, it becomes possible to prevent further sliding of the cover caused by an unexpected force from outside, so user's convenience is increased.

The foregoing embodiment and advantages are merely exemplary and are not to be construed as limiting the present invention. The present teaching can be readily applied to other types of apparatuses. Also, the description of the embodiments of the present invention is intended to be illustrative, and not to limit the scope of the claims, and many alternatives, modifications, and variations will be apparent to those skilled in the art.

## Claims

1. A slide type mobile phone module installed between a main body and a cover of a mobile phone for opening/closing the cover for the main body through the sliding motion, the module comprising:
a lower plate combined with the main body of the mobile phone;
an upper plate combined with the cover of the mobile phone for sliding over the lower plate; and
a first coil spring with a designated length, whose one end being fastened to the lower plate by means of a first fastening pin, and the other end being fastened to the upper plate by means of a second fastening pin,
wherein the upper plate slides are slidably moved over the lower plate slide by elastic force of the coil spring.

2. The module according to claim 1, further comprising:
a second coil spring with a designated length, whose one end being fastened to the lower plate by means of a third fastening pin disposed at a lower portion of the first fastening pin, and the other end being fastened to the upper plate by means of a fourth fastening pin disposed at a lower portion of the second fastening pin.

3. The module according to claim 1 or claim 2, wherein the lower plate comprises a guide rail on the side, and the upper plate comprises a joint opposite the guide rail.

4. The module according to one of claims 1 to 3, wherein, when the coil spring is curved to the utmost, the elastic force from the coil spring is used to complete the sliding motion of the upper plate.

5. The module according to one of claims 1 to 4, wherein a surface of the guide rail is processed with a surface treatment or a curving treatment to reduce friction or noises during the sliding motion.

6. The module according to one of claims 1 to 5, wherein a magnet is attached to an edge of the upper plate or the lower plate, whereby, after the completion of the sliding motion, the upper plate and the lower plate are magnetically combined.
